# EUROPEAN PATENT APPLICATION

(11) **EP 1 650 706 A2**
(43) Date of publication of application: **26.04.2006**
(21) Application number: 05007472.3
(22) Date of filing: 05.04.2005
(51) Int. Cl.: G06T 5/00, H04M 1/72, H04N 5/225

(54) **System and method for enhancing image quality of mobile communication terminal**

(30) Priority: 25.10.2004 KR 2004085445
(71) Applicant: LG ELECTRONICS INC., Seoul (KR)
(72) Inventor: Nam, Soo-Hyun 112-402, Shibumdanji,, Sungnam Gyunggi-Do (KR)
(74) Representative: von Hellfeld, Axel

(57) **Abstract**

An illumination apparatus comprises a display screen for displaying a first image of a first object to be photographed, wherein the first image has a first image size; a light sensor for measuring intensity of illumination around the first object; and a circuit for determining whether the intensity of illumination is greater than a threshold value and displaying a second image of the first object, wherein the second image has a second image size, and wherein the second image is displayed on a first portion of the display screen and a third image having a predetermined intensity of illumination is displayed on a second portion of the display screen.

## Description

### BACKGROUND OF THE INVENTION

### Field of the Invention

The present invention relates to a mobile communication terminal and, more particularly, to a method for enhancing image quality of a mobile communication terminal.

### Description of the Related Art

In general, a mobile communication terminal is a device allowing a user to wirelessly page so as to be connected to communicate with the other party any time anywhere through switching control of an MSC (Mobile Switching Center) while moving in a service area formed by a base station (BS). Currently, the mobile communication terminal is available for data communication with symbols, numbers and characters and multimedia communication including an image signal as well as voice communication. In particular, development of a mobile communication terminal for a image communication by attaching a large screen display unit and a camera thereto is actively ongoing.

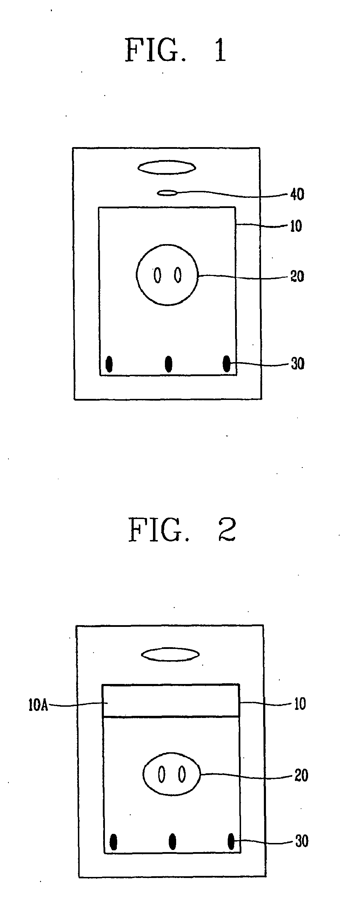

Figure 1 illustrates a display unit of a related art mobile communication terminal. As shown in Figure 1, the display unit 10 of a mobile communication terminal displays a subject image 20 through a camera (not shown) mounted at the mobile communication terminal. In this case, the mobile communication terminal uses a plurality of auxiliary light emitting units 30 as background illumination of the subject, and if intensity of illumination around the subject is low in spite of using the auxiliary light emitting units 30, a flash 40 or a spot light is used. The plurality of auxiliary light emitting units 30 are LEDs (Light Emission Diode).

The related art mobile communication terminal may include a large LCD and a camera. If brightness around a photographed object is not high, an image of the object displayed on the large LCD is not shown clearly. Thus, in order to brighten the vicinity of the object, the flash is mounted at the mobile communication terminal.

However, use of the flash in order to brighten the vicinity of the object causes a problem if the flash is turned on right before the user, the user is dazzled and cannot make a natural facial expression degrading image quality.

### SUMMARY OF THE INVENTION

A method for enhancing image quality of a mobile communication terminal is provided. In accordance with one embodiment, the method comprises detecting a first intensity of illumination around a first object; reducing size of an image of the first objected displayed on a display of the mobile communication terminal when the first intensity is lower than a first threshold value; and displaying a bright image on at least one region of the display to increase light intensity around the first object.

In one embodiment, the image is scaled down to a predetermined size. The predetermined size is determined based on the first intensity of illumination. The region of the display is one of upper, lower, left and right sides of the display. The display is an LCD (Liquid Crystal Display).

In accordance with another embodiment, an illumination apparatus comprises a display screen for displaying a first image of a first object to be photographed, wherein the first image has a first image size; a light sensor for measuring intensity of illumination around the first object; and a circuit for determining whether the intensity of illumination is greater than a threshold value and displaying a second image of the first object, wherein the second image has a second image size, and wherein the second image is displayed on a first portion of the display screen and a third image having a predetermined intensity of illumination is displayed on a second portion of the display screen.

The third image has a higher intensity illumination than the first image. The second image size is smaller than the first image size. The third image is an image comprising mostly white pixels, for example. The third image is an image substantially comprises pixels that have high intensity illumination, in certain embodiments.

In an exemplary embodiment, the third image surrounds the second image. In another embodiment, the third image appears at a first side of the second image. In yet another embodiment, the third image appears at a first and second side of the second image.

In one or more embodiments, an illumination method comprises displaying a first image of a first object to be photographed, wherein the first image has a first image size; measuring intensity of illumination around the first object; and determining whether the intensity of illumination is greater than a threshold value and displaying a second image of the first object, wherein the second image has a second image size, and wherein the second image is displayed on a first portion of the display screen and a third image having a predetermined intensity of illumination is displayed on a second portion of the display screen.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 illustrates a display unit of a related art mobile communication terminal;
Figure 2 illustrates a method for enhancing image quality of a mobile communication terminal in accordance with one embodiment of the present invention;
Figure 3 is a flow chart of a method for enhancing image quality of the mobile communication terminal in accordance with one embodiment of the present invention; and
Figures 4A to 4C show various embodiments of a mobile communication terminal in accordance with the present invention.

### DETAILED DESCRIPTION OF THE PREFERRED EMBODIMENTS

A method for enhancing image quality of a mobile communication terminal capable of enhancing image quality by displaying a white image with high light transmittance at a predetermined region on a screen when a peripheral intensity of illumination of a subject is lower than a predetermined threshold value, will now be described with reference to the accompanying drawings.

As shown in Figure 2, the mobile communication terminal displays the white image 10A with high light transmittance at a predetermined region on the screen, thereby enhancing image quality of the subject image 20 as photographed.

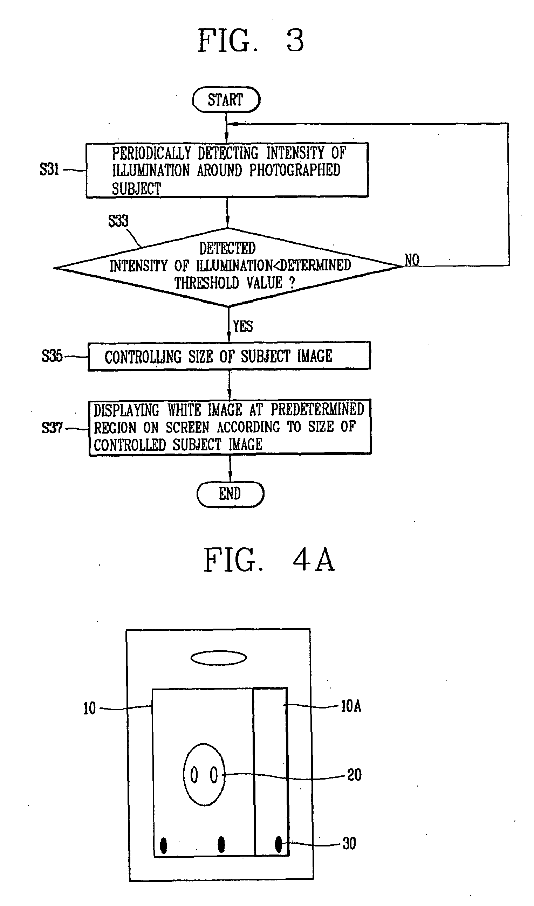

As shown in Figure 3, the method for enhancing image quality of the mobile communication terminal includes: periodically detecting intensity of illumination around a subject (S31); comparing the detected intensity of illumination with a predetermined threshold value (S33); controlling a size of an image of the subject if the detected intensity of illumination is lower than the predetermined threshold value (S35); and displaying a white image at a predetermined region on a screen according to the controlled size of the image of the subject (S37).

The method for enhancing image quality of the mobile communication terminal in accordance with the present invention will now be described in detail.

First, the mobile communication terminal periodically detects intensity of illumination around the subject photographed by the camera attached thereto (S31) and compares the detected intensity of illumination with the predetermined threshold value (S33).

If the detected intensity of illumination is lower than the predetermined threshold value, the mobile communication terminal recognizes that the intensity of illumination around the subject is low and controls the size of the subject image 20 (S35). That is, the mobile communication terminal scales down the size of the subject image 20 based on the detected intensity of illumination.

Thereafter, the mobile communication terminal displays the white image 10A with high light transmittance at the predetermined region on the screen according to the downscaled subject image 20 (S37). Namely, the mobile communication terminal can display the white image 10A as large as the size of the display by scaling down the subject image 20 in one of upward, downward, left and right direction.

Accordingly, the method for enhancing image quality of the mobile communication terminal in accordance with the present invention can enhance intensity of illumination around the subject with the light emitted through the white image 10A without high light transmittance displayed at the predetermined region on the screen.

The image quality of the photographed subject image can be more enhanced by displaying a white image with high light transmittance at the predetermined region on the screen through the following various methods.

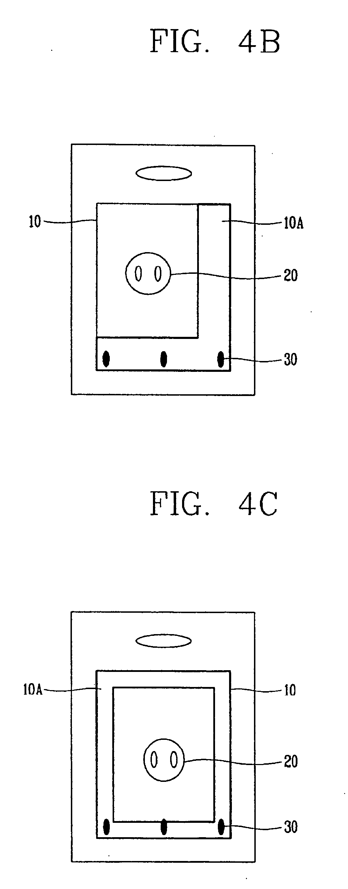

As shown in Figures 4A to 4C, the mobile communication terminal can scale down the subject image 20 in one of surround, upward, downward, left and right directions and display the white image 10A with high light transmittance at a predetermined region on the screen according to the downscaled subject image 20, in order to emit light through the displayed white image 10A, thereby enhancing image quality of the photographed subject image 20.

As so far described, the method for enhancing image quality of a mobile communication terminal in accordance with the present invention has the following advantage.

When intensity of illumination around a subject is lower than a predetermined threshold value, a white image with high light transmittance is displayed at a predetermined region on the screen, thereby enhancing image quality of the mobile communication terminal.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method for enhancing image quality of a mobile communication terminal comprising:
detecting a first intensity of illumination around a first object;
reducing size of an image of the first objected displayed on a display of the mobile communication terminal when the first intensity is lower than a first threshold value; and
displaying a bright image on at least one region of the display to increase light intensity around the first object.

2. The method of claim 1, wherein, the image is scaled down to a predetermined size.

3. The method of claim 2, wherein the predetermined size is determined based on the first intensity of illumination.

4. The method of claim 1, wherein the region of the display is one of upper, lower, left and right sides of the display.

5. The method of claim 1, wherein the display is an LCD (Liquid Crystal Display).

6. An illumination apparatus comprising:
a display screen for displaying a first image of a first object to be photographed, wherein the first image has a first image size;
a light sensor for measuring intensity of illumination around the first object; and
a circuit for determining whether the intensity of illumination is greater than a threshold value and displaying a second image of the first object, wherein the second image has a second image size, and
wherein the second image is displayed on a first portion of the display screen and a third image having a predetermined intensity of illumination is displayed on a second portion of the display screen.

7. The illumination apparatus of claim 6, wherein the third image has a higher intensity illumination than the first image.

8. The illumination apparatus of claim 6, wherein the second image size is smaller than the first image size.

9. The illumination apparatus of claim 6, wherein the third image is an image comprising mostly white pixels.

10. The illumination apparatus of claim 6, wherein the third image is an image substantially comprising pixels that have high intensity illumination.

11. The illumination apparatus of claim 6, wherein the third image surrounds the second image.

12. The illumination apparatus of claim 6, wherein the third image appears at a first side of the second image.

13. The illumination apparatus of claim 6, wherein the third image appears at a first and second side of the second image.

14. An illumination method comprising:
displaying a first image of a first object to be photographed, wherein the first image has a first image size;
measuring intensity of illumination around the first object; and
determining whether the intensity of illumination is greater than a threshold value and displaying a second image of the first object, wherein the second image has a second image size, and
wherein the second image is displayed on a first portion of the display screen and a third image having a predetermined intensity of illumination is displayed on a second portion of the display screen.

15. The illumination method of claim 14, wherein the third image has a higher intensity illumination than the first image.

16. The illumination method of claim 14, wherein the second image size is smaller than the first image size.

17. The illumination method of claim 14, wherein the third image is an image comprising mostly white pixels.

18. The illumination method of claim 14, wherein the third image is an image substantially comprising pixels that have high intensity illumination.

19. The illumination method of claim 14, wherein the third image surrounds the second image.

20. The illumination method of claim 14, wherein the third image appears at a first side of the second image.
